# EUROPÄISCHE PATENTANMELDUNG

(11) **EP 2 540 383 A1**
(43) Veröffentlichungstag der Anmeldung: **02.01.2013**
(21) Anmeldenummer: 12167486.5
(22) Anmeldetag: 10.05.2012
(51) Int. Cl.: B01D 63/02, B01D 65/02, B01D 35/18

(54) **Sterilisation von Membranfiltern**

(30) Priorität: 29.06.2011 DE 102011078345
(71) Anmelder: Krones AG, 93073 Neutraubling (DE)
(72) Erfinder: Zacharias, Jörg, 93096 Köfering (DE); Scheu, Dirk, 86735 Amerdingen (DE)
(74) Vertreter: Grünecker, Kinkeldey, Stockmair & Schwanhäusser

(57) **Zusammenfassung**

Die vorliegende Erfindung betrifft ein Filtermodul, welches ein druckdicht verschließbares Filtergehäuse und eine Heizvorrichtung (180) zum Erhitzen eines Fluids im Filtergehäuse umfasst. Weiterhin betrifft die vorliegende Erfindung ein Verfahren zum Sterilisieren eines erfindungsgemäßen Filtermoduls oder eine seiner Weiterbildungen, wobei das Verfahren die Schritte aufweist: druckdichtes Verschließen des Filtergehäuses, Erhitzen des Fluids in dem Filtergehäuse auf eine Sterilisierungstemperatur, vorzugsweise im Bereich von 100°C bis 150°C, höchst vorzugsweise im Bereich 121°C bis 140°C, und Halten der Sterilisierungstemperatur des Fluids in einem vorbestimmten Temperaturbereich für eine vorbestimmte Zeit, wobei der vorbestimmte Temperaturbereich vorzugsweise innerhalb von 100°C bis 150°C, höchst vorzugsweise innerhalb von 121°C bis 140°C liegt und wobei die vorbestimmte Zeit vorzugsweise im Bereich von 1 Minute bis 60 Minuten, höchst vorzugsweise im Bereich von 5 Minuten bis 20 Minuten liegt.

## Beschreibung

### Gebiet der Erfindung

Die vorliegende Erfindung betrifft ein sterilisierbares Filtermodul/Membranmodul. Weiterhin betrifft die Erfindung ein Verfahren zum Sterilisieren eines Filtermoduls/ Membranmoduls.

### Stand der Technik

Zur Wasseraufbereitung werden sogenannte Filtermodule/Membranmodule eingesetzt. Dabei werden aus einem Zulaufmedium (zu filterndes Medium bzw. Unfiltrat, z.B. Rohwasser, Milch, oder andere Fluide) bestimmte und/oder unerwünschte Stoffe herausgefiltert. Das gefilterte Medium verlässt das Filtermodul als Filtrat (Permeat) und zurück bleibt ein Konzentrat (Retentat). Zur Wasseraufbereitung werden häufig Membranfiltermodule verwendet, beispielsweise Ultrafiltrationsmodule, in denen vor allem Keime (Bakterien, Hefen) aus dem zu filtrierenden Medium entfernt werden bzw. zurückgehalten werden.

Man unterscheidet üblicherweise Mikrofiltration und Ultrafiltration über die Größe der abgetrennten Partikel. Werden Partikel mit einer Größe von 0,5 bis 0,1 µm abgetrennt, ist von Mikrofiltration die Rede, sind die Partikel 0,1 bis 0,01 µm groß, so wird die Filtration als Ultrafiltration bezeichnet. In der Regel werden dazu Kunststoffmembrane (Hohlfasern, Flachmembrane, Wickelmembrane) eingesetzt. Deren Porengröße bewegt sich in einem Bereich von etwa 1 µm bis hin zu 0,001 µm. Spezielle Ultrafiltrationsmembranen werden in der Regel mit 0,2 bis 0,02 µm eingesetzt. In einigen Bereichen werden auch keramische Membranen verwendet. Daneben sind jedoch auch auf dem Prinzip der Umkehrosmose basierende Filter in Verwendung, sowie Kerzenfilter. Daneben gibt es noch das Prinzip der Kiesbettfilter.

Beim Einsatz von Kunststoffmembranen ist die Höhe der Reinigungstemperatur und einer Sanitations- bzw. Sterilisationstemperatur von großer Bedeutung. Die bisher üblichen Reinigungstemperaturen und Sanitations- bzw. Sterilisationstemperaturen sind nur bis maximal 60°C bis 85°C üblich. Aufgrund von begrenzter Materialbeständigkeit, insbesondere auch der Vergussverbindungen (Potting-Verfahren) als auch der Membrane selbst, dürfen diese Temperaturen nicht überschritten werden.

Zur Reinigung werden gemäß dem Stand der Technik anstelle des zu filternden Mediums Heißwasser oder Dampf zugeführt. Dies führt jedoch zu großen Temperaturgradienten innerhalb des Filtermoduls und an den Membranen, was ebenfalls beim Abkühlen ein Problem darstellt.

Bei der Ultra- und Mikrofiltration mit Hohlfasermembranen, wobei beispielsweise Unfiltrat dem Inneren der Hohlfasermembranen zugeführt wird und Permeat außerhalb davon abgesaugt wird (In-Out-Filterung), ist der hygienische Schwachpunkt vor allem auf der Filtratseite vorhanden. Die Retentatseite spielt dabei keine so große Rolle, da hier das vom Prozess her belastete Medium sowieso fließt. Andererseits kann sich bei umgekehrter Filterrichtung, wobei Permeat aus dem Innern der Hohlfasermembranen abgesaugt wird (Out-In-Filterung), zumindestens ein Teil des Retentats im Filtermodul ablagern und zu unhygienischen Rückständen führen. Weiterhin sind insbesondere Anschlüsse und Abdichtungsstellen der Membranverpottung und an dem Gehäuse zu findende Verbindungen hygienisch kritische Stellen, beispielsweise nicht hygienische Abdichtungen mit O-Ringen.

Das größte Problem bei Membranmodulen sind alle Stellen, die durch eine herkömmliche Reinigung nicht erreichbar sind und die durch Reinigungs- und Desinfektionsmittel, wenn überhaupt, nur diffusiv erreicht werden. Das heißt, an diesen Toträumen ist strömungsmechanisch kein Stoffaustausch vorhanden, der Schmutz oder Keime abtransportieren könnte. Dies sind besonders auch die Sümpfe am Übergang von der Membran zur Membranverpottung. Dabei kann sich ein Überstand von Ablagerungen bilden, der durch die geringe dort vorhandene Strömungsgeschwindigkeit nur unzureichend gesäubert wird. Da hier nur überwiegend diffusiver Austausch der Medien stattfindet, wird in der Regel versucht, das Modul mittels Durchströmen mit heißem Wasser zu reinigen und durch die Hitze darin vorhandene Keime abzutöten.

Beim Einsatz von Kunststoffmembranen ist daher die Reinigungstemperatur von großer Bedeutung. Dabei sind bisherige Reinigungstemperaturen und Sanitations- bzw. "Sterilisations"-Temperaturen nur bis maximal 60°C bis 85°C üblich. Bei diesen Temperaturen ist allerdings die Bezeichnung "Sterilisieren" noch nicht gerechtfertigt. Von Sterilisieren spricht man üblicherweise erst ab Temperaturen von 121 °C (z.B. über 20 Minuten und mehr), idealerweise bis 140°C. Daher werden geringere Temperaturanwendungen in der Regel als Heißwassersanitationen bezeichnet.

Weiterhin ist der Temperaturgradient, mit dem die Membran auf diese Sanitationstemperatur aufgeheizt wird und anschließend wieder abgekühlt wird, äußerst kritisch. Aufgrund unterschiedlicher Materialausdehnungskoeffizienten darf dieser in der Regel 1-2°C/min nicht überschreiten. Ansonsten kommt es sehr schnell zur Materialermüdung und zu Materialverspannungen bzw. -überlastungen. Diese haben zur Folge, dass es schließlich zum Bruch der Membranen oder zum Ablösen des Mantels vom Potting oder der Membran zum Potting kommt. Am häufigsten wird allerdings der Bruch der Membran direkt am Übergang zum Potting als Schaden beobachtet. Diese Membranmodule sind dadurch so beschädigt, dass sie ausgewechselt werden müssen.

Die Problematik besteht also darin, dass höhere Temperaturen (> 85°C) und gleichzeitige Druck- bzw. Differenzdruckänderungen in der Regel nicht anwendbar sind, da entweder Membran oder Gehäuse, Abdichtung oder Verpottung nicht für diese Druck-Temperaturgradienten geeignet sind. Es kommt bei höheren Temperaturen zu Materialschäden. Zu schnelles Aufheizen und Abkühlen führt darüber hinaus zu Materialermüdung und ebenfalls zu frühzeitigen Materialschäden. Vor allem die Verpottung der Membrane zum Gehäuse ist problematisch, d.h. die Verbindung der Membran zum Epoxid und vom Epoxid beispielsweise zur PES- oder PVC-Wandung oder einer metallischen Außenwand. Entscheidend ist darüber hinaus auch die Membranauswahl. Bei vielen Systemen wird PES (Polyethersulfon) als Material für die Kunststoffmembrane eingesetzt. In der Getränkeindustrie werden häufig auch Edelstahlmäntel verbaut. Da in der Regel ein direktes Verpotten in diese Edelstahlhülsen materialbedingt nicht möglich ist, werden Membranmodul-Kartuschen in Edelstahlaußenmäntel gesteckt.

Zusammengefasst werden also Membranmodule aufgrund mangelnder Reinigungs-, Desinfektions- und Sanitationsfähigkeit bzw. Sterilsationsfähigkeit von der hygienischen Seite her kritisch betrachtet. Kritikpunkt ist vor allem der Keimbewuchs innerhalb des Moduls. Insbesondere Sümpfe und Toträume innerhalb der Module, die keinen intensiven Stoffaustausch durch Strömung unterliegen, sind hier kritisch. Außerdem sind viele Membranmodule nicht nach aseptischen Kriterien verbaut. Auch Verbindungsflansche werden nicht nach den üblichen Richtlinien des hygienischen Designs gebaut. Daher ist es erwünscht, dass diese Module sterilisiert werden (bei Temperaturen von 121 °C oder mehr), was allerdings aufgrund der Materialien und der Konstruktion bis dato technisch nicht wiederholbar war, ohne dass dabei ein Schaden am Modul oder an der Membran entsteht.

Angesichts dieser Nachteile des Stands der Technik ist es eine Aufgabe der vorliegenden Erfindung, diese Nachteile zu vermeiden und eine Sterilisation eines Filtermoduls zu ermöglichen.

### Beschreibung der Erfindung

Die oben genannte Aufgabe wird gelöst durch ein Filtermodul, welches ein druckdicht verschließbares Filtergehäuse und eine Heizvorrichtung zum Erhitzen eines Fluids im Filtergehäuse umfasst. Aufgrund dieser Konstruktion ist das erfindungsgemäße Membranmodul sterilisierbar, und zwar weit über das bisher übliche Temperaturniveau hinaus. Indem das Filtergehäuse druckdicht verschlossen wird, und das im Inneren des Filtergehäuses befindliche Fluid mittels der Heizvorrichtung erhitzt wird, kann das Fluid (in der Regel Wasser) allmählich und weitgehend gleichmäßig aufgeheizt werden. Dadurch können Verspannungen innerhalb des Moduls vermieden werden. Außerdem entfallen die Belastungen, die durch die Strömungsverhältnisse des üblichen Filtrationsbetriebs verursacht werden. Zudem kann dieses Erhitzen über 100°C hinaus erfolgen, da das Filtergehäuse druckdicht verschlossen ist und das Wasser deshalb nicht ausdampft.

Eine Weiterbildung des erfindungsgemäßen Filtermoduls besteht darin, dass an dem Filtergehäuse ein oder mehrere verschließbare Einlässe zum Zuführen eines zu filtrierenden Mediums und ein oder mehrere verschließbarer Auslässe zum Abführen des gefilterten Mediums vorgesehen sein kann. Auf diese Weise kann das Filtergehäuse auf einfache Weise druckdicht verschlossen werden, nämlich, indem sowohl der Einlass als auch der Auslass verschlossen werden. Beispielsweise kann dies durch entsprechende Ventile realisiert sein.

Eine andere Weiterbildung des Filtermoduls besteht darin, dass die Heizvorrichtung einen Mantel für das Filtergehäuse umfassen kann, der wenigstens teilweise doppelwandig mit einem dazwischen liegenden Hohlraum ausgebildet ist, und wobei der Hohlraum mit einem Heizmedium befüllbar und/oder durchströmbar ist. Dabei kann ein häufig ohnehin vorhandener Mantel um das Membranelement herum zu einem Doppelmantel ausgebildet werden. Dieser Doppelmantel kann mit einem Heiz- bzw. Kühlmedium befüllt und auch durchströmt werden. Der Doppelmantel kann beispielsweise ein aus konzentrischen Hülsen ausgebildeter Doppelmantel sein. Der Hohlraum in dem Doppelmantel wird mit Heißwasser oder gesättigtem Dampf befüllt und/oder durchströmt. Mit Heißwasser, das unter Druck steht, sind Temperatur bis weit über 121 °C möglich, auch die in der Regel genutzten 140°C sind möglich. Der Systemdruck muss oberhalb des Dampfdrucks der Siedelinie gehalten werden.

Gemäß einer anderen Weiterbildung weist der Hohlraum weiterhin einen Zulauf und einen Ablauf für das Heizmedium auf, insbesondere für Heißwasser und/oder Heißdampf als Heizmedium. Über den Zulauf kann das Heizmedium schnell zugeführt werden und nach erfolgter Sterilisation kann ein Kühlmedium durchgeleitet werden.

Nach einer weiteren Ausführungsform umfasst die Heizvorrichtung wenigstens ein in dem Filtergehäuse angeordnetes elektrisches Heizelement, oder die Heizvorrichtung umfasst wenigstens ein auf dem Filtergehäuse angeordnetes elektrisches Heizelement, wobei dieses Heizelement auf einer zum Fluid gerichteten Innenseite des Filtergehäuses angeordnet ist, und/oder das Heizelement ist in einer Wandung des Filtergehäuses integriert, insbesondere in einen Bodenbereich und/oder einen Deckelbereich des Filtergehäuses, und/oder das Heizelement kann zumindest teilweise in dem Hohlraum angeordnet sein. Auch auf diese Weise kann eine Beheizung des Filtermoduls zur Verfügung gestellt werden, um das Fluid in dem Filtermodul aufzuheizen und zu sterilisieren.

Das elektrische Heizelement kann insbesondere eine Heizleitung, vorzugsweise in Form einer Heizwendel umfassen. Dies stellt eine kostengünstige Ausführung des Heizelements dar.

Das elektrische Heizelement kann auch in Form eines Peltier-Elementes (Elektrothermischer Wandler) ausgebildet sein. Damit ergibt sich zusätzlich der Vorteil, dass auch ein Kühlen des Filtergehäuses möglich ist.

Zusätzlich oder alternativ zu der doppelwandigen Ausführung des Filtergehäuses und dem elektrischen Heizelement kann die Heizvorrichtung eine Befeuerung des Filtergehäuses, insbesondere eines Bodenbereichs des Filtergehäuses umfassen. Auch damit lässt sich auf einfache Weise eine Erhitzung des druckdicht verschlossenen Filtergehäuses auf Sterilisationstemperatur ermöglichen.

Im Filtergehäuse können ein oder mehrere Membrane angeordnet sein, insbesondere Flachmembrane oder Hohlfasermembrane, oder es kann im Filtergehäuse eine Wickelmembran oder ein Kiesbett angeordnet sein. Damit ist die erfindungsgemäße Sterilisation bei üblicherweise verwendeten Filtermedien möglich.

Das oben genannte Problem bzw. die genannte Aufgabe wird weiterhin gelöst durch ein Verfahren zum Sterilisieren eines erfindungsgemäßen Filtermoduls ohne eine seiner Weiterbildungen, wobei das Verfahren die Schritte aufweist: druckdichtes Verschließen des Filtergehäuses, Erhitzen des Fluids in dem Filtergehäuse auf eine Sterilisierungstemperatur, vorzugsweise im Bereich von 100°C bis 150°C, höchst vorzugsweise im Bereich 121 °C bis 140°C, und Halten der Sterilisierungstemperatur des Fluids in einem vorbestimmten Temperaturbereich für eine vorbestimmte Zeit, wobei der vorbestimmte Temperaturbereich vorzugsweise innerhalb von 100°C bis 150°C, höchst vorzugsweise innerhalb von 121 °C bis 140°C liegt und wobei die vorbestimmte Zeit vorzugsweise im Bereich von 1 Minute bis 60 Minuten, höchst vorzugsweise im Bereich von 5 Minuten bis 20 Minuten liegt.

Die Vorteile des erfindungsgemäßen Verfahrens und dessen nachfolgend aufgeführten Weiterbildungen sind entsprechend denen, die oben im Zusammenhang mit dem erfindungsgemäßen Filtermodul aufgeführt wurden. Auf eine Wiederholung wird daher verzichtet.

Das erfindungsgemäße Verfahren lässt sich weiterbilden, indem das Erhitzen des Fluids mittels Durchströmen des Hohlraums mit Heißwasser und/oder Heißdampf erfolgen kann.

Eine andere Weiterbildung des erfindungsgemäßen Verfahrens besteht darin, dass nach dem Erhitzen des Fluids auf die Sterilisierungstemperatur und nach dem Halten der Sterilisierungstemperatur des Fluids der folgende weitere Schritt durchgeführt wird: Abkühlen des Fluids, insbesondere mittels Durchströmen des Hohlraums mit Wasser, welches gegenüber dem Heißwasser und/oder Heißdampf eine niedrigere Temperatur aufweist, insbesondere mittels Zuführen von Wasser mit Umgebungstemperatur, vorzugsweise 5°C bis 40°C, höchst vorzugsweise 10°C bis 20°C, in den Zulauf.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Zeichnungen

- Figur 1: stellt eine erste Ausführungsform des erfindungsgemäßen Filtermoduls dar.
- Figur 2a: stellt eine zweite Ausführungsform des erfindungsgemäßen Filtermoduls dar.
- Figur 2b: zeigt eine Abwandlung der zweiten Ausführungsform.
- Figur 3a: stellt eine dritte Ausführungsform des erfindungsgemäßen Filtermoduls dar.
- Figur 3b: zeigt eine Abwandlung der dritten Ausführungsform.
- Figur 4: stellt eine vierte Ausführungsform des erfindungsgemäßen Filtermoduls dar.
- Figur 5: stellt eine fünfte Ausführungsform des erfindungsgemäßen Filtermoduls dar.
- Figur 6: stellt eine sechste Ausführungsform des erfindungsgemäßen Filtermoduls dar.

### Ausführungsformen

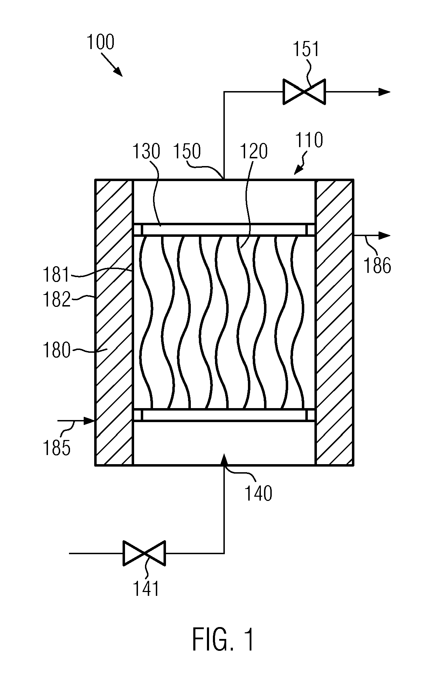

Figur 1 zeigt ein erfindungsgemäßes Filtermodul 100 gemäß einer ersten Ausführungsform. Das Filtermodul 100 umfasst ein druckdicht verschließbares Filtergehäuse 110. Unfiltrat wird über den Einlass 140 zugeführt, wobei eine Zuführleitung mittels einem Ventil 141 absperrbar ist. Permeat wird über den Auslass 150 abgeführt und die zugehörige Leitung ist über ein Ventil 151 verschließbar. Im Falle eines Querstrommoduls (Cross-Flow-Filtration), welches von Unfiltrat durchströmt wird, wobei also Unfiltrat in das Filtermodul hinein und wieder herausströmt, ist zumindest ein weiterer verschließbarer Auslass vorgesehen (nicht in Figur 1 gezeigt). Bei verschlossenen Ventilen 141, 151 ist das Filtergehäuse druckdicht verschlossen, so dass eine Erhitzung des darin befindlichen Fluids über die Siedtemperatur bei atmosphärischem Druck möglich ist.

Das Filtermodul 100 weist weiterhin eine Heizvorrichtung auf. Diese besteht in dieser ersten Ausführungsform aus einem mittels Wandungen 181 und 182 doppelwandig ausgebildeten Mantel des Filtergehäuses, so dass ein Hohlraum 180 entsteht, durch den ein heißes Medium geführt werden kann, beispielsweise Heißwasser oder Heißdampf. Das Heizmedium wird über einen Zulauf 185 zugeführt und über einen Ablauf 186 abgeführt. Wenn eine Sterilisation des Filtermoduls erfolgen soll, werden die Ventile 141 und 151 verschlossen, so dass es möglich ist, in dem Filtergehäuse 110 Druck aufzubauen und das darin befindliche Fluid hoch zu erhitzen. Die Erhitzung erfolgt durch Zuführen eines Heizmediums in den Hohlraum 180, der von diesem durchströmt wird. Dabei erhitzt sich auch das Fluid in dem Filtergehäuse. Keime, die sich beispielsweise bei den Hohlfasermembranen 120 oder der Vergussmasse/Verpottung 130 abgelagert haben, können somit abgetötet werden. In der Regel ist hierbei eine Erhitzung auf 121 °C bis 140°C vorgesehen, und zwar über einen Zeitraum von 20 Minuten oder länger. Nach dieser Sterilisation kann über den Einlass 185 kühleres Medium eingeführt werden, was zu einer allmählichen Abkühlung des Fluids in dem Filtergehäuse 110 führt. Die Erhitzung und Abkühlung des Fluids im Filtergehäuse erfolgt daher langsam, so dass keine plötzlichen Verspannungen auftreten können.

Für stehende Mikrofiltrations- und Ultrafiltrationsmembranmodule ist eine Ausführung mit einem Doppelmantelmodul gut geeignet, da stehende Anordnungen eine gleichmäßigere und symmetrischere Erwärmung aller Bestandteile der Konstruktion über die Höhe ohne unsymmetrische Querverzüge zulassen. Allerdings ist die liegende Anordnung besonders für Umkehrosmosemodule vorteilhaft, da diese in der Regel aufgrund ihrer konstruktiven Voraussetzungen liegend angeordnet werden. Hier werden im Unterschied zu den oben beschriebenen Membranen Wickelmodule eingebaut, wodurch thermischen Querverzüge nicht in den gefährlichen Größenordnungen auftreten. Weiterhin kann in diesem System eine Feder zur Kompensation der Wärmeausdehnung vorgesehen sein, so dass es hierdurch keine Materialverspannungen geben kann. Der Doppelmantel kann auch in mehrere Sektionen aufgeteilt sein.

In den nachfolgend beschriebenen Figuren unterscheiden sich die Bezugszeichen einander entsprechender Merkmale gegenüber Figur 1 lediglich um die Hunderterstelle. Auf die Beschreibung der gleichen Merkmale wird auf die Ausführungen zu Figur 1 verwiesen.

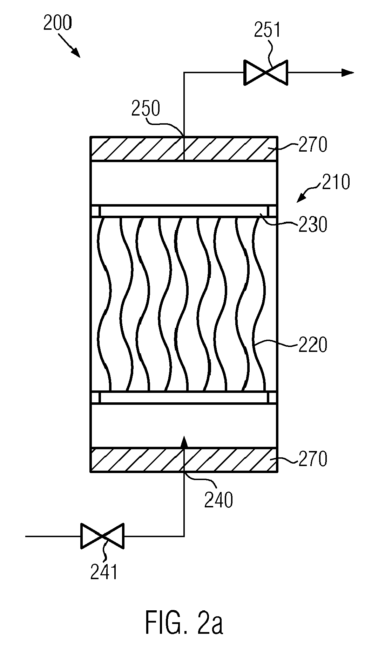

Figur 2a zeigt eine zweite Ausführungsform des erfindungsgemäßen Filtermoduls 200. Die Heizvorrichtung besteht in dieser Ausführungsform aus einer massiven Ausführung der Boden- und Deckelbereiche 270, in die Heizspiralen entsprechend einer elektrischen Kochplatte eingebaut sind. Auf diese Weise kann das Fluid in dem Filtergehäuse 210 allmählich aufgeheizt werden. Eine Abkühlung kann hier jedoch nur durch Wärmeabgabe an die Umgebung erfolgen.

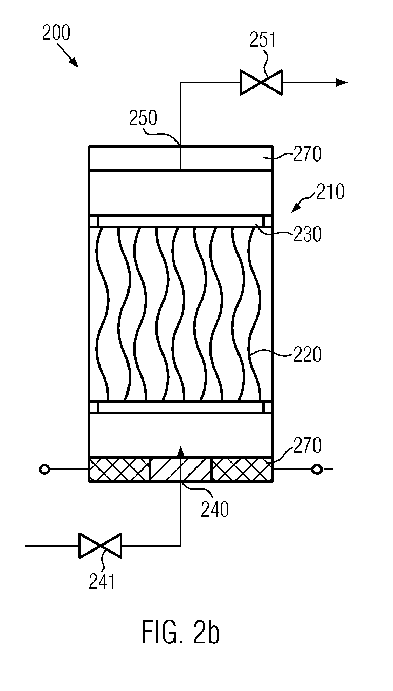

Figur 2b zeigt eine Abwandlung der zweiten Ausführungsform. Die Platte(n) des Boden- und/oder Deckelbereichs 270 kann/können dabei als Peltier-Element(e) ausgeführt sein. Im dargestellten Beispiel ist die untere Platte (Bodenplatte) als Peltier-Element mit elektrischen Anschlüssen (+/-) ausgebildet. Damit ist dann durch Umkehren der Stromrichtung zusätzlich ein Abkühlen möglich, das nach erfolgter Sterilisation durchgeführt werden kann.

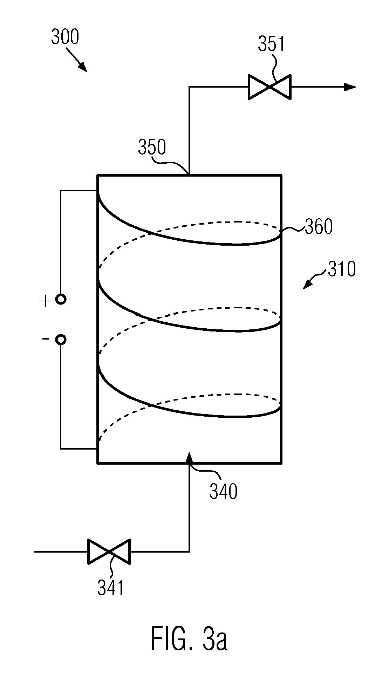

Figur 3a zeigt eine dritte Ausführungsform 300 des erfindungsgemäßen Filtermoduls. In dieser Ausführungsform besteht die Heizvorrichtung aus einer Heizspirale 360, die um das Gehäuse 310 des Filtermoduls 300 gewickelt ist, und die mittels Durchleiten von elektrischem Strom heizbar ist. Die genannten Heizschlangen können auch als konzentrische Ringe oder in parallelen weiteren Sektionen miteinander verflochten sein.

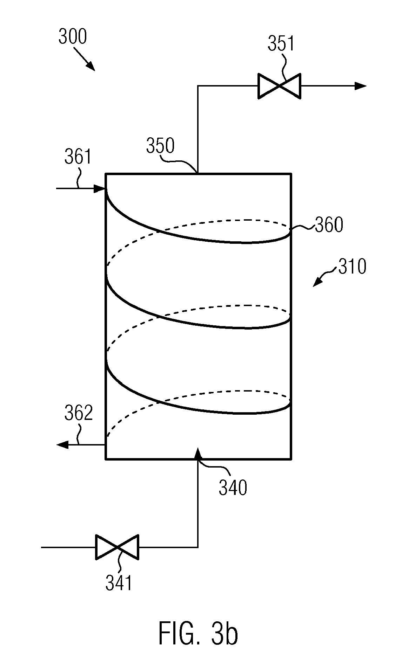

Figur 3b zeigt eine Abwandlung der dritten Ausführungsform. Dabei können Heizschlangen 360 funktional auch wie in der ersten Ausführungsform gemäß Figur 1 ausgebildet sein, beispielsweise in Form von einer Rohrleitung 360, so dass durch diese ein Heizmedium fließen kann. Diese können auch in Sektionen ausgebildet sein. Es ist ein Einlass 361 und ein Auslass 362 für das Heizmedium vorgesehen. Außerdem oder alternativ kann eine sogenannte "Dimple-Plate"- oder eine "Tample Plate"-Ausführung gewählt werden.

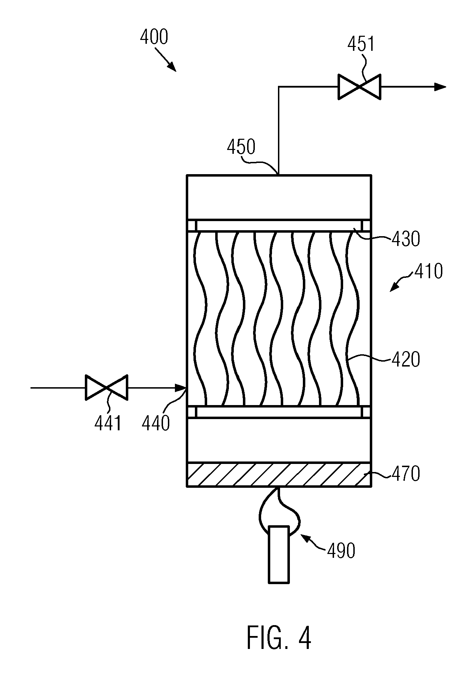

Figur 4 zeigt eine vierte Ausführungsform 400 des erfindungsgemäßen Filtermoduls, wobei hierbei die Heizvorrichtung aus einer Befeuerungsanlage 490, beispielsweise einem Gasbrenner, besteht. Dabei wird der Bodenbereich des Gehäuses 410 unmittelbar mit einer Flamme aufgeheizt, wobei der aufgeheizte Bodenbereich dann die Wärme an das druckdicht eingeschlossene Fluid abgibt.

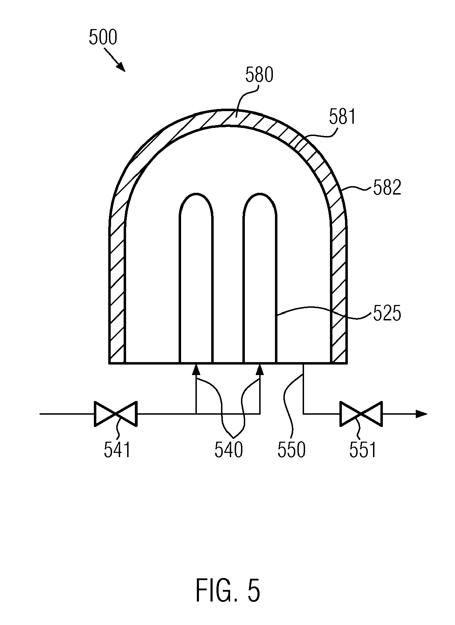

Figur 5 zeigt eine fünfte Ausführungsform 500 des erfindungsgemäßen Filtermoduls. In dieser Ausführungsform ist das Filtermodul ein Kerzenfilter mit Wickelmembranen 525. Unfiltrat wird über die Einlässe 540 in die Wickelmembranen eingebracht und über den Auslass 550 als Permeat abgesaugt. Wie in der ersten Ausführungsform 100 ist hier das Gehäuse doppelwandig ausgebildet, nämlich mit einer inneren Wandung 581 und einer äußeren Wandung 582, wodurch sich ein Hohlraum 580 ergibt, der wiederum mit einem Heizmedium befüllt bzw. durchströmt werden kann. Auch kann durch Verschließen der Ventile 541 und 551 das Gehäuse des Filtermoduls 500 druckdicht verschlossen werden und das darin befindliche Fluid hocherhitzt werden, nämlich über die Siedetemperatur bei atmosphärischem Druck hinaus.

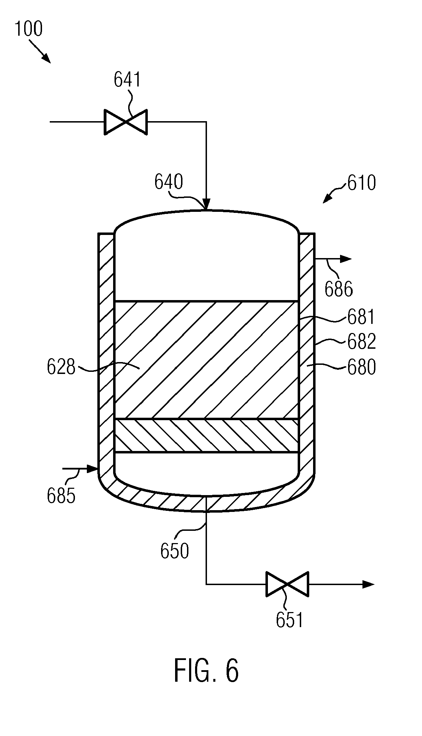

Figur 6 zeigt eine sechste Ausführungsform 600 des erfindungsgemäßen Filtermoduls, wobei in diesem Fall das Filtermodul ein Kiesbettfilter darstellt. Über die Zuleitung 640 wird beispielsweise unfiltriertes Wasser eingefüllt, welches durch die Kiesschicht 628 gefiltert wird, um dann über den Auslass 650 gereinigt abgeführt zu werden. Wie bereits bei der ersten und der fünften Ausführungsform ist auch hier das Gehäuse doppelwandig ausgebildet, also mit einem Hohlraum 680, der durch eine innere Wandung 681 und eine äußere Wandung 682 begrenzt wird. Zur Sterilisation des Filterinnenraums wird Heißwasser oder Heißdampf dem Einlass 685 zugeführt und über den Auslass 686 abgeführt. Durch druckdichtes Verschließen mittels Verschließen der Ventile 641 und 651 lässt sich das Filtergehäuse 610 druckdicht verschließen und das darin befindliche Fluid hocherhitzen.

Für alle Ausführungsformen gilt, dass es durch die spannungsfreie Anordnung und durch die drucksichere Ausführung möglich ist, Temperaturgradienten von bis zu 10°C/Minute und Sterilisationstemperaturen von 121°C bis 140°C zu erreichen. In einer besonders gleichmäßigen Ausführung können auch noch höhere Temperaturgradienten erzielt werden.

Grundsätzlich wird durch die "eingeschlossene Kochtopfausführung" ein gleichmäßiger Aufheizungsprozess erreicht, der nicht durch ungünstige schädliche Strömungsbelastungen, durch zusätzliche Druckverluste oder Schwingungen oder anderweitige Druckschläge die Membranen und besonders deren Pottungen belastet wird. Es tritt nur die unterschiedliche Materialausdehnung der Komponenten auf. Diese ist jedoch bei entsprechender spannungsfreier Konstruktion nicht mit einer Auswirkung durch Beschädigung verbunden.

Die Sterilisationstemperatur wird dadurch deutlich erhöht und die Lebenszeit der Membrane wird somit deutlich verlängert. Eine Sterilisation ist mit den genannten von außen beheizbaren Modulen sowohl manuell als auch automatisiert durchführbar.

Die Vorteile der Erfindung bestehen darin, dass das Membranelement durch entsprechende Materialauswahl (Membran, Membrangehäuse, Potting) mit Heißwasser sterilisierbar ist. Dabei bedeutet Heißwasser einen Temperaturbereich von bis zu 150°C. Dabei ist der Dampfdruck oberhalb des Drucks der Siedelinie. Bei 140°C muss der Druck z.B. größer als 3,6 bar sein. Das Prinzip ist vergleichbar mit dem eines Schnellkochtopfes. Dadurch können alle üblichen Sterilisationsprofile entsprechend der Abtötungskinetik für jeden Keim nach D- und Z-Werten gefahren werden. Durch die Temperaturen erreicht man jeden Totraum und Sumpf innerhalb des Membranmoduls. Es wird durcherhitzt. Strömungsmechanischen Austausch dieser Stellen erreicht man allerdings trotzdem nicht, wobei man von "Totsterilisieren" spricht. Im Heiz- und Kühlmantel kann jedes beliebige Heiz- bzw. Kühlmedium gefahren werden. Dieser Mantelraum ist sicher vom System abgetrennt. Zum Aufheizen bzw. Abkühlen werden in der Regel Temperaturgradienten von 1 °C/Minute verwendet. Es kann jedoch auch sein, dass mit diesem Verfahren Gradienten bis zu etwa 10°C/Minute erreicht werden können. Die Einspannung des Moduls mit einer Feder erlaubt die Kompensation der Wärmeausdehnung während der Sanitation/Sterilisation. Das Doppelmantelerhitzungsverfahren und seine konstruktive Ausprägung sind für alle Membranelementfilter von Mikrofiltration (MF) über Ultrafiltration (UF) bis zur Umkehrosmose (UO) einsetzbar.

## Patentansprüche

1. Filtermodul, umfassend:
ein druckdicht verschließbares Filtergehäuse, und
eine Heizvorrichtung zum Erhitzen eines Fluids im Filtergehäuse.

2. Filtermodul nach Anspruch 1, weiterhin umfassend:
wenigstens einen verschließbaren Einlass zum Zuführen eines zu filtrierenden Mediums, und
wenigstens einen verschließbaren Auslass zum Abführen des gefilterten Mediums.

3. Filtermodul nach Anspruch 1 oder 2, wobei die Heizvorrichtung einen Mantel für das Filtergehäuse umfasst, der wenigstens teilweise doppelwandig mit einem dazwischen liegenden Hohlraum ausgebildet ist, und wobei der Hohlraum mit einem Heizmedium befüllbar und/oder durchströmbar ist.

4. Filtermodul nach Anspruch 3, wobei der Hohlraum weiterhin einen Zulauf und einen Ablauf für das Heizmedium aufweist, insbesondere für Heißwasser und/oder Heißdampf als Heizmedium.

5. Filtermodul nach Anspruch 1 oder 2, wobei die Heizvorrichtung wenigstens ein in dem Filtergehäuse angeordnetes elektrisches Heizelement umfasst, oder wobei die Heizvorrichtung wenigstens ein auf dem Filtergehäuse angeordnetes elektrisches Heizelement umfasst und das Heizelement auf einer zum Fluid gerichteten Innenseite des Filtergehäuses angeordnet ist, und/oder wobei das Heizelement in eine Wandung des Filtergehäuses integriert ist, insbesondere in einen Bodenbereich und/oder einen Deckelbereich des Filtergehäuses, und/oder wobei in Verbindung mit Anspruch 3 das Heizelement zumindest teilweise in dem Hohlraum angeordnet ist.

6. Filtermodul nach Anspruch 5, wobei das elektrische Heizelement eine Heizleitung, insbesondere eine Heizwendel, und/oder ein Peltier-Element umfasst.

7. Filtermodul nach Anspruch 1 oder 2, wobei die Heizvorrichtung eine Befeuerung des Filtergehäuses, insbesondere eines Bodenbereichs des Filtergehäuses umfasst.

8. Filtermodul nach einem der Ansprüche 1 bis 7, wobei weiterhin im Filtergehäuse ein oder mehrere Membrane, insbesondere Flachmembrane oder Hohlfasermembrane, angeordnet sind oder eine Wickelmembran oder ein Kiesbett angeordnet ist.

9. Verfahren zum Sterilisieren eines Filtermoduls gemäß einem der Ansprüche 1 bis 8, mit den Schritten:
druckdichtes Verschließen des Filtergehäuses;
Erhitzen des Fluids in dem Filtergehäuse auf eine Sterilisierungstemperatur,
vorzugsweise im Bereich von 100°C bis 150°C, höchst vorzugsweise im Bereich von 121 °C bis 140°C; und
Halten der Sterilisierungstemperatur des Fluids in einem vorbestimmten Temperaturbereich für eine vorbestimmte Zeit, wobei der vorbestimmte Temperaturbereich vorzugsweise innerhalb von 100°C bis 150°C, höchst vorzugsweise innerhalb von 121 °C bis 140°C liegt und wobei die vorbestimmte Zeit vorzugsweise im Bereich von 1 Minute bis 60 Minuten, höchst vorzugsweise im Bereich von 5 Minuten bis 20 Minuten liegt.

10. Verfahren nach Anspruch 9, wobei das Erhitzen des Fluids mittels Durchströmen des Hohlraums mit Heißwasser und/oder Heißdampf erfolgt.

11. Verfahren nach Anspruch 9 oder 10, wobei nach dem Erhitzen des Fluids auf die Sterilisierungstemperatur und nach dem Halten der Sterilisierungstemperatur des Fluids der folgende weitere Schritt durchgeführt wird:
Abkühlen des Fluids, insbesondere mittels Durchströmen des Hohlraums mit Wasser, welches gegenüber dem Heißwasser und/oder Heißdampf eine niedrigere Temperatur aufweist.
